(19) Europäisches Patentamt
European Patent Office
Office européen des brevets

(11) **EP 2 870 565 B1**

(12) **EUROPÄISCHE PATENTSCHRIFT**

(45) Veröffentlichungstag und Bekanntmachung des Hinweises auf die Patenterteilung:
**27.09.2017 Patentblatt 2017/39**

(21) Anmeldenummer: **13750290.2**

(22) Anmeldetag: **08.08.2013**

(51) Int Cl.:
*H04L 29/06* (2006.01)          *G06F 17/30* (2006.01)
*G06F 21/57* (2013.01)

(86) Internationale Anmeldenummer:
**PCT/EP2013/066648**

(87) Internationale Veröffentlichungsnummer:
**WO 2014/048630 (03.04.2014 Gazette 2014/14)**

(54) **ÜBERPRÜFUNG EINER INTEGRITÄT VON EIGENSCHAFTSDATEN EINES GERÄTES DURCH EIN PRÜFGERÄT**

TESTING INTEGRITY OF PROPERTY DATA OF A DEVICE USING A TESTING DEVICE

TEST D'INTÉGRITÉ DE DONNÉES SUR LES PROPRIÉTÉS D'UN APPAREIL PAR UN APPAREIL DE TEST

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2012 DE 102012217743**

(43) Veröffentlichungstag der Anmeldung:
**13.05.2015 Patentblatt 2015/20**

(73) Patentinhaber: **Siemens Aktiengesellschaft**
**80333 München (DE)**

(72) Erfinder:
• **BUSSER, Jens-Uwe**
  **85579 Neubiberg (DE)**
• **FISCHER, Kai**
  **85598 Baldham (DE)**

(56) Entgegenhaltungen:
**EP-A1- 1 030 237     WO-A1-00/18162**

**Beschreibung**

Die Erfindung betrifft ein Verfahren und ein Prüfsystem zum Überprüfen einer Integrität von Eigenschaftsdaten eines Gerätes durch ein Prüfgerät innerhalb eines Netzwerkes.

Die Einbeziehung von verteilten Mess- oder Steuergeräten im Umfeld der Anlagenautomatisierung gewinnt zunehmend an Bedeutung. Dabei sind beispielsweise intelligente Feldgeräte für die Umsetzung intelligenter Stromnetze nötig, sowie Geräte mit Steuerungsfunktion innerhalb von Automatisierungsanlagen oder Zähler zur Abrechnung bezogener Dienste wie Kommunikation, Strom, Gas oder Wasser.

Dabei werden häufig sicherheitsrelevante Daten, wie beispielsweise gesammelte Messdaten oder Schaltbefehle, innerhalb eines Netzwerkes übermittelt.

Manipulationen solcher Geräte stellen ein ernstzunehmendes Problem für einen sicheren, zuverlässigen und ökonomischen Betrieb von Infrastrukturen, wie beispielsweise Automatisierungsanlagen oder intelligenten Energieversorgungsnetzen, dar. Unter einer Manipulation ist dabei eine unautorisierte Modifikation von Daten auf Geräten wie Mess- oder Steuergeräten zu verstehen. Darunter fällt beispielsweise ein Verändern der Geräteeigenschaften oder
-funktionalitäten, wie zum Beispiel das Ersetzen einer Gerätesoftware (Firmware) oder das Verändern einzelner Bereiche der Gerätesoftware. Außerdem sind Konfigurationsdaten eines Gerätes vor unbeabsichtigter und unbefugter Modifikation zu schützen.

Der Anmelderin ist aus dem Dokument mit dem amtlichen Aktenzeichen des Deutschen Patent- und Markenamtes 10 2011 077 289.8 ein System und ein Verfahren zur Erkennung einer Zustandsänderung in einer Automatisierungsanlage bekannt. Dabei wird in regelmäßigen Abständen die Integrität der Gerätesoftware oder der Konfigurationsdaten über ein Challenge-Response-Protokoll abgefragt. Stimmt ein durch ein Gerät berechneter Fingerabdruck nicht mit dem von einem Überwachungsgerät erwarteten Fingerabdruck überein, so wurde das Gerät unautorisiert verändert.

Aus der Patentschrift DE 10 2007 034 525 B4 ist ein Verfahren bekannt, das in einem vorbestimmten Speicherbereich von Geräten gespeicherte Daten überprüft, indem ein lokal von einem Gerät berechneter Fingerabdruck mit einem von einer Prüfinstanz berechneten Fingerabdruck abgeglichen wird.

Die internationale Anmeldung WO 00/18162 offenbart ein Challenge-Response-Verfahren, bei dem mobile Geräte oder "user terminals" oder "remote terminals" identifiziert oder authentifiziert werden sollen durch einen Challenger. Der Challenger ist beispielsweise eine "updating authority" und stellt ein Software-Update in Abhängigkeit von der Überprüfung des "remote terminals" bereit. Dabei gehen für eine Überprüfung in eine Hashfunktion die Software eines Gerätes und ein Identifizierer ein, sowie eine Challenge des Challengers. Dieser Hashwert wird auf beiden Seiten, Challenger und Responder, generiert und eine Übereinstimmung wird geprüft. Der Druckschrift liegt das Problem zugrunde, eine Authentifizierung, beispielsweise von Software, über einen ungeschützten Kanal durchzuführen.

Die europäische Patentanmeldung beschreibt eine Integritätsprüfung einer "computing platform" mittels eines Challenge-Response-Verfahrens mit Hashwertbildung über Prüfdaten der "computing platform".

Für eine große Anzahl von zu überprüfenden Geräten innerhalb eines Netzwerkes wird von einer Prüfinstanz eine hohe Rechenleistung erwartet, insbesondere bei einer parallelen oder nahezu gleichzeitigen Überprüfung. Gleichzeitig soll durch die Überprüfung ein Entdecken von Manipulationen sichergestellt sein.

Vor diesem Hintergrund besteht die Aufgabe der vorliegenden Erfindung darin, ein Verfahren und ein Prüfsystem bereitzustellen, welche eine vereinfachte und manipulationssichere Überprüfung der Integrität eines jeweiligen Gerätes bei einer großen Gerätezahl durch eine Prüfinstanz ermöglicht.

Diese Aufgabe wird durch ein Verfahren und ein Prüfsystem gemäß den in den unabhängigen Ansprüchen angegebenen Merkmalen gelöst. Vorteilhafte Ausführungsformen und Weiterbildungen sind in den Unteransprüchen angegeben.

Die im Folgenden genannten Vorteile müssen nicht notwendigerweise durch die Gegenstände der unabhängigen Patentansprüche erzielt werden. Vielmehr kann es sich hier auch um Vorteile handeln, welche lediglich durch einzelne Ausführungsformen oder Weiterbildungen erzielt werden.

Erfindungsgemäß weist ein Verfahren zum Überprüfen einer Integrität von Eigenschaftsdaten eines Gerätes, wobei die Eigenschaftsdaten einen Programmdatensatz und einen Konfigurationsdatensatz umfassen, durch ein Prüfgerät innerhalb eines Netzwerkes, welches das Gerät, das Prüfgerät und mindestens ein weiteres Gerät mit weiteren Eigenschaftsdaten umfasst, wobei die weiteren Eigenschaftsdaten einen weiteren Programmdatensatz und einen weiteren Konfigurationsdatensatz umfassen, folgende Schritte auf:

Eine Station, welche zumindest mit dem Prüfgerät mittels des Netzwerkes gekoppelt ist, stellt die Eigenschaftsdaten und die weiteren Eigenschaftsdaten bereit. Das Prüfgerät wertet die Eigenschaftsdaten und die weiteren Eigenschaftsdaten hinsichtlich mindestens einer Identität von dem Programmdatensatz und dem weiteren Programmdatensatz aus und weist eine Kennzeichnung in Abhängigkeit von einem Ergebnis des Auswertens zu.

Das Prüfgerät ermittelt einen Parameter, welcher dazu geeignet ist, einen Hash-Wert und einen Prüf-Hash-Wert einer Hashfunktion zu beeinflussen, wobei der Parameter in Abhängigkeit von der Kennzeichnung ausgestaltet wird, und überträgt den Parameter an das Gerät.

Das Gerät berechnet den Hash-Wert in Abhängigkeit von der Hashfunktion und von einer Zeichenkette, wobei die Zeichenkette den Parameter und die Eigenschaftsdaten umfasst und eine Reihenfolge innerhalb der Zeichenkette vorgebbar ist und überträgt den Hash-Wert an das Prüfgerät.

Das Prüfgerät berechnet den Prüf-Hash-Wert in Abhängigkeit von der Hashfunktion und von der Zeichenkette, wobei die Zeichenkette den Parameter und die Eigenschaftsdaten umfasst und eine Reihenfolge innerhalb der Zeichenkette vorgebbar ist.

Das Prüfgerät bestätigt die Integrität der Eigenschaftsdaten, falls der Hash-Wert mit dem Prüf-Hash-Wert übereinstimmt.

Als Integrität von Eigenschaftsdaten eines Gerätes wird in der vorliegenden Anmeldung ein Zustand verstanden, der auf eine Manipulation des Gerätes oder dessen Eigenschaftsdaten nicht schließen lässt. Das bedeutet beispielsweise, dass Eigenschaftsdaten bei einer Überprüfung im Vergleich zu einer früheren Überprüfung der Eigenschaftsdaten nicht verändert oder ersetzt wurden oder einem erwarteten, festgelegten oder gespeicherten Zustand entsprechen.

Als Programmdatensatz der Eigenschaftsdaten werden typischerweise die Gerätesoftware oder Firmware eines Gerätes verstanden oder Programmdaten in Form von Software. Ein Konfigurationsdatensatz enthält typischerweise Parameter wie Netzwerkadressen, Geräteidentifizierer oder kryptographisches Schlüsselmaterial und Zertifikate, sowie Parameter, die die Funktionalität der Software konfigurieren; diese sind für ein Gerät individuell.

Das vorgeschlagene Verfahren für die Überprüfung eines Gerätes innerhalb eines Netzwerkes ermöglicht die Berücksichtigung eines oder mehrerer weiterer Geräte innerhalb des Netzwerkes, indem das Prüfgerät sowohl die Eigenschaftsdaten des Gerätes als auch die der weiteren Geräte auswertet und die weiteren Verfahrensschritte der Überprüfung in Abhängigkeit von dem Ergebnis des Auswertens einleitet. Somit wird eine Möglichkeit geschaffen, ein Gerät innerhalb eines Netzwerkes auf Manipulationen hin zu überprüfen, wobei durch die Berücksichtigung weiterer Geräte innerhalb des Netzwerkes die Voraussetzungen für eine effiziente Überprüfung einer großen Gerätezahl geschaffen werden. Somit werden Manipulationen zeitnah detektiert.

Ein zu überprüfendes Gerät ermittelt dabei beispielsweise den Hash-Wert jedes Mal aufs Neue, das heißt die Berechnung des Hash-Wertes erfolgt bei jeder Überprüfung mit dem je Überprüfung neu vorgegebenen Parameter aufs Neue.

Ebenso berechnet das Prüfgerät den Prüf-Hash-Wert für das zu überprüfende Gerät je Überprüfung. Die Eigenschaftsdaten, wie insbesondere den Programmdatensatz sowie den Konfigurationsdatensatz, erhält das Prüfgerät dabei von einer Station, die beispielsweise die Funktion einer Engineeringstation innerhalb einer industriellen Automatisierungsanlage hat, in einem zum Zeitpunkt der Überprüfung aktualisierten Stand. Die Station ist dabei in der Regel Bestandteil des Netzwerkes und stellt dabei sowohl die Konfigurationsdaten der zu überprüfenden Geräte bereit, als auch die auf den Geräten installierten Firmware- und Softwareversionen.

Die Überprüfung von in einer Anlage vorhandenen Geräten durch einen gemeinsamen Prüfserver, der für die Überprüfung vieler Geräte parallel optimiert ist, reduziert einen Mehraufwand durch mehrere einzelne Prüfsysteme für ein oder wenige Geräte.

Gemäß einer Ausführungsform wird der Parameter zu Beginn der Zeichenkette übergeben.

Somit ist es dem zu überprüfenden Gerät nicht möglich, für die Berechnung des Hash-Wertes einen inneren Zustand des Hashverfahrens, der nur in Abhängigkeit von dem Programmdatensatz und dem Konfigurationsdatensatz berechnet wird, zu speichern, im Anschluss den Programmdatensatz und oder den Konfigurationsdatensatz zu ändern, und wiederum im Anschluss dennoch einen korrekten Hash-Wertes, der mit dem Prüf-Hash-Wert übereinstimmt, zu berechnen. Dies wäre für den Fall, dass der Parameter am Ende der zu hashenden Zeichenkette übergeben wird, leicht möglich.

Somit muss das zu überprüfende Gerät bei einer Überprüfung den Hash-Wert in Abhängigkeit von dem für die aktuelle Überprüfung übergebenen Parameter sowie dem aktuell auf dem Gerät befindlichen Programmdatensatz und Konfigurationsdatensatz berechnen.

Gemäß einer Ausführungsform ist der Parameter als eine Zufallszahl ausgebildet, dessen Länge an den Hash-Wert angepasst wird.

Die Zufallszahl ist dabei typischerweise eine Zahl der Länge 128 Bit bis 512 Bit (16 bis 128 Byte). Die Länge sollte dabei idealerweise der Länge des Hash-Wertes des verwendeten kryptographischen Hashverfahrens entsprechen. Als sicherer Hashalgorithmus (Secure Hash Algorithm SHA) kommt dabei insbesondere SHA-256, SHA-384 oder SHA-512 in Frage. Wird der ermittelte Hash-Wert vor der Rückübertragung gekürzt, weil die Menge der übertragenen Daten gering gehalten werden soll und auch ein kürzerer Hash-Wert bereits eine ausreichende Sicherheitsstufe bietet, so kann auch die Zufallszahl entsprechend kurz ausgestaltet werden.

Gemäß einer Ausführungsform werden der Parameter und/oder der Hash-Wert kryptographisch gesichert übertragen.

Erfolgt die Übertragung des Parameters verschlüsselt, so wird das Risiko verringert, dass andere Geräte, für die die Information über den Parameter, beispielsweise die Zufallszahl, nicht bestimmt ist, Kenntnis über die Zufallszahl erlangen. Nur ein Gerät mit passendem Schlüssel kann damit Kenntnis über die Zufallszahl erlangen.

Eine signierte Übertragung des Hash-Wertes von dem zu überprüfenden Gerät an das Prüfgerät gewährleistet die Authentizität der Antwort des zu überprüfenden Gerätes. Somit kann das Prüfgerät mittels eines öffentlichen Schlüssels erkennen, wenn der Hash-Wert nicht von dem zu überprüfenden Gerät übertragen wird. Dies ist insbesondere sinnvoll, um Denial-of-Service-Angriffe durch weitere Geräte im Netzwerk zu erkennen bzw. zu verhindern.

Es ist ferner, alternativ zur digitalen Signatur, der Einsatz eines keyed-Hashverfahrens denkbar, bei dem sowohl von dem zu überprüfenden Gerät als auch dem Prüfgerät mittels eines geheimen Schlüssels ein Message Authentication Code (MAC) für die übertragene Nachricht berechnet wird, und der jeweils berechnete MAC übereinstimmen muss.

Eine verschlüsselte Übertragung des Hash-Wertes von dem zu überprüfenden Gerät an das Prüfgerät verhindert ferner, dass andere Geräte im Netzwerk, welche die gleiche Zufallszahl erhalten haben und den gleichen Programm- und Konfigurationsdatensatz besitzen sollten, aufgrund einer Manipulation diesen aber nicht mehr besitzen und daher den korrekten Hash-Wert nicht mehr selbst berechnen können, die Übertragung des Hash-Wertes einfach mithören und diesen Hash-Wert dann selbst an das Prüfgerät senden, um das Prüfgerät zu täuschen.

Gemäß einer Weiterbildung wird an das Gerät und das mindestens eine weitere Gerät ein identischer Parameter übertragen.

Gerade bei einer parallelen Überprüfung vieler Geräte vereinfacht ein identischer Parameter, beispielsweise eine Zufallszahl, die an alle zu überprüfenden Geräte verschickt wird, die Überprüfung, da der Rechenaufwand auf dem Prüfgerät gering gehalten wird.

Gemäß einer Weiterbildung berechnet das Prüfgerät für die Berechnung des Prüf-Hash-Wertes in Abhängigkeit von der Kennzeichnung einen inneren Zustand in Abhängigkeit von der Hashfunktion, dem Parameter und dem Programmdatensatz und speichert den inneren Zustand.

Die Größe eines Programmdatensatzes ist stark geräteabhängig und kann für zu überprüfende Geräte von einigen KB - beispielsweise im Falle eines RFID-Tags - bis zu einigen Dutzend MB - beispielsweise im Falle intelligenter Feldgeräte oder speicherprogrammierbarer Steuerungen (PLCs) - reichen. Die Größe des Konfigurationsdatensatzes ist dagegen üblicherweise deutlich geringer. Sie liegt meist im Bereich von maximal einigen Prozent des Programmdatensatzes. Die Größe des Parameters ist gegenüber der des Programmdatensatzes vernachlässigbar klein.

Damit verursacht der Programmdatensatz den größten Rechenaufwand bei der Berechnung des Prüf-Hash-Wertes.

Innerhalb einer Anlage existieren in der Regel relativ wenige unterschiedliche Programmdatensätze, da die Geräte einer Bauserie meist alle die gleiche Firm- beziehungsweise Software haben oder höchstens wenige unterschiedliche Versionen innerhalb einer Anlage existieren. Damit ist die Anzahl der in einer Anlage verwendeten unterschiedlichen Programmdatensätze stark begrenzt, auch wenn sehr viele Geräte in der Anlage installiert sind.

Erkennt nun das Prüfgerät bei der Auswertung der Eigenschaftsdaten und der weiteren Eigenschaftsdaten, dass die jeweiligen Programmdatensätze identisch sind, so kann das Prüfgerät bei Versenden eines identischen Parameters an die Geräte mit identischem Programmdatensatz einen inneren Zustand berechnen, der für Geräte mit gemeinsamen Programmdatensatz gemeinsam gilt. Dies bedeutet für den Prüfserver eine Reduzierung des Rechenaufwandes, da er erst nach Berechnung des inneren Zustandes den Prüf-Hash-Wert jeweils in Abhängigkeit von dem inneren Zustand und dem Konfigurationsdatensatz, der nun für jedes Gerät individuell berechnet wird, berechnen muss.

Gemäß einer weiteren Ausführungsform überträgt das Prüfgerät einen einmaligen Parameter an das Gerät und einen davon abweichenden weiteren einmaligen Parameter an das mindestens eine weitere Gerät, wobei der einmalige Parameter und der weitere einmalige Parameter innerhalb eines vorgebbaren Zeitfensters übertragen werden.

Ein Vorteil dieser nahezu gleichzeitigen Überprüfung vieler zu überprüfender Geräte mit unterschiedlichen Parametern, wie insbesondere Zufallszahlen, besteht darin, dass Weiterleitungsangriffe erschwert werden. Ein für einen Weiterleitungsangriff in der Anlage installiertes Gerät, auf das die Berechnung eines Hash-Wertes umgeleitet wird, um so eine Manipulation des zu überprüfenden Gerätes zu verdecken, hat nun einen extrem hohen Prüfaufwand: Es erhält nun von jedem manipulierten Gerät, dessen Aufforderung zur Berechnung des Hash-Wertes weitergeleitet wird, einen unterschiedlichen Parameter zur Berechnung des Hash-Wertes. Beispielsweise kann durch unerwartet hohe Antwortzeiten der überprüften Geräte ein Weiterleitungsangriff aufgedeckt werden.

Gemäß einer Ausführungsform überträgt das Prüfgerät einen einmaligen Parameter an das Gerät und einen weiteren einmaligen Parameter an das mindestens eine weitere Gerät, in Abhängigkeit von der Kennzeichnung.

Damit ist es möglich, an Geräte mit gleichem Programmdatensatz einen Parameter aus einer kleinen Anzahl verschiedener Parameter zu wählen, so dass für Geräte mit gleichem Programmdatensatz von einem identischen Parameter nicht ausgegangen werden kann. Dadurch erhöht sich zwar der Rechenaufwand für das Prüfgerät im Vergleich zu einem identischen Parameter für alle Geräte einer Anlage, allerdings ist es für manipulierte Geräte somit schwieriger, sich über den korrekten Hash-Wert auszutauschen. Haben beispielsweise mehrere manipulierte Geräte zusammen noch alle Teile eines originalen Programmdatensatzes gespeichert, können sie in Kooperation den richtigen Hash-Wert erstellen. Erhalten Sie allerdings unterschiedliche Parameter, wird diese Abstimmung erschwert und der Rechenaufwand erhöht, da nun zu jedem Parameter, den eines der Geräte erhalten hat, ein anderer Hash-Wert errechnet werden muss.

Gemäß einer Weiterbildung wird die Integrität des Gerätes durch das Prüfgerät bestätigt, wenn das Berechnen und Übertragen des Hash-Wertes durch das Gerät innerhalb eines individuell vorgebbaren Antwortzeitfensters erfolgt.

Im Falle eines Weiterleitungsangriffes ist es nun praktisch nicht möglich, dass mehrere manipulierte Geräte innerhalb des vorgegebenen Antwortzeitfensters durch die Übertragung des Hash-Wertes antworten, da ein Gerät, auf welches die Berechnung des Hash-Wertes umgeleitet wird, einen zu hohen Rechenaufwand zu leisten hat, um in der vorgegebenen Zeit zu antworten. Insbesondere falls das Überprüfungsverfahren vieler Geräte durch das Prüfgerät gleichzeitig gestartet wird, kann ein Weiterleitungsangriff somit aufgedeckt werden.

Gemäß einer Weiterbildung berechnet das Prüfgerät den Prüf-Hash-Wert vor oder nach dem Übertragen des einmaligen Parameters.

Im Falle einer separaten Berechnung des Prüf-Hash-Wertes für jedes Gerät fällt für das Prüfgerät ein hoher Rechenaufwand an, so dass es vorteilhaft ist, die Berechnungen der Prüf-Hash-Werte vor dem Versenden des Parameters bereits auszuführen, so dass das Prüfgerät sofort bei Erhalt des Hash-Wertes von einem zu überprüfenden Gerät dessen Korrektheit schnell überprüfen und gegebenenfalls einen Alarm auslösen kann. Eine Berechnung des Prüf-Hash-Wertes durch das Prüfgerät nach Erhalt des Hash-Wertes als Antwort von dem zu überprüfenden Gerät ist ebenso möglich, allerdings kann ein falscher Hash-Wert erst später erkannt und ein Alarm gegebenenfalls erst später ausgelöst werden. Bei Vorliegen einer Warnung oder Hinweisen auf die Manipulation eines Gerätes oder einer Gruppe von Geräten kann dieses Verfahren dennoch gewählt werden, um eine hohe Sicherheit bei der Überprüfung sicherzustellen.

Die Erfindung umfasst ferner ein Prüfsystem zum Überprüfen einer Integrität von Eigenschaftsdaten eines Gerätes, wobei die Eigenschaftsdaten einen Programmdatensatz und einen Konfigurationsdatensatz umfassen, durch ein Prüfgerät innerhalb eines Netzwerkes, welches das Gerät, das Prüfgerät und mindestens ein weiteres Gerät mit weiteren Eigenschaftsdaten umfasst, wobei die weiteren Eigenschaftsdaten einen weiteren Programmdatensatz und einen weiteren Konfigurationsdatensatz umfassen, umfassend:

- eine Station zum Bereitstellen der Eigenschaftsdaten und der weiteren Eigenschaftsdaten, wobei die Station zumindest mit dem Prüfgerät mittels des Netzwerkes gekoppelt ist;

- das Prüfgerät zum Auswerten der Eigenschaftsdaten und der weiteren Eigenschaftsdaten hinsichtlich mindestens einer Identität von dem Programmdatensatz und dem weiteren Programmdatensatz, Zuweisen einer Kennzeichnung in Abhängigkeit von einem Ergebnis des Auswertens, Ermitteln eines Parameters, welcher dazu geeignet ist, einen Hash-Wert und einen Prüf-Hash-Wert einer Hash-Funktion zu beeinflussen, wobei der Parameter in Abhängigkeit von der Kennzeichnung ausgestaltet wird, Übertragen des Parameters an das Gerät, Berechnen des Prüf-Hash-Wertes in Abhängigkeit von der Hash-Funktion und von einer Zeichenkette, wobei die Zeichenkette den Parameter und die Eigenschaftsdaten umfasst und eine Reihenfolge innerhalb der Zeichenkette vorgebbar ist, und Bestätigen der Integrität der Eigenschaftsdaten, falls der Hash-Wert mit dem Prüf-Hash-Wert übereinstimmt;

- das Gerät zum Berechnen des Hash-Wertes in Abhängigkeit von der Hash-Funktion und von einer Zeichenkette, wobei die Zeichenkette den Parameter und die Eigenschaftsdaten umfasst und eine Reihenfolge innerhalb der Zeichenkette vorgebbar ist und Übertragen des Hash-Wertes an das Prüfgerät.

Gemäß einer Ausführungsform umfasst das Prüfsystem ferner mindestens eine weitere Einheit zur Verwendung in einem der Verfahrensschritte gemäß den oben genannten Ausführungsformen des Verfahrens.

Gemäß einer weiteren Ausführungsform sind das Prüfgerät und die Station als gemeinsame Einheit ausgestaltet.

Somit müssen keine Daten über das Netzwerk ausgetauscht werden, wie insbesondere die oftmals umfangreichen Eigenschaftsdaten.

Die Erfindung wird nachfolgend mit Ausführungsbeispielen anhand der Figuren näher erläutert. Es zeigen:

Figur 1     eine schematische Darstellung des Überprüfungsverfahrens gemäß einem ersten Ausführungsbeispiel der Erfindung;

Figur 2     eine schematische Darstellung des Überprüfungsverfahrens gemäß einem zweiten Ausführungsbeispiel der Erfindung;

Figur 3     eine schematische Darstellung des Überprüfungsverfahrens gemäß einem dritten Ausführungsbeispiel der Erfindung.

In den Figuren sind gleiche oder funktionsgleiche Elemente mit denselben Bezugszeichen versehen worden, sofern nichts anderes angegeben ist.

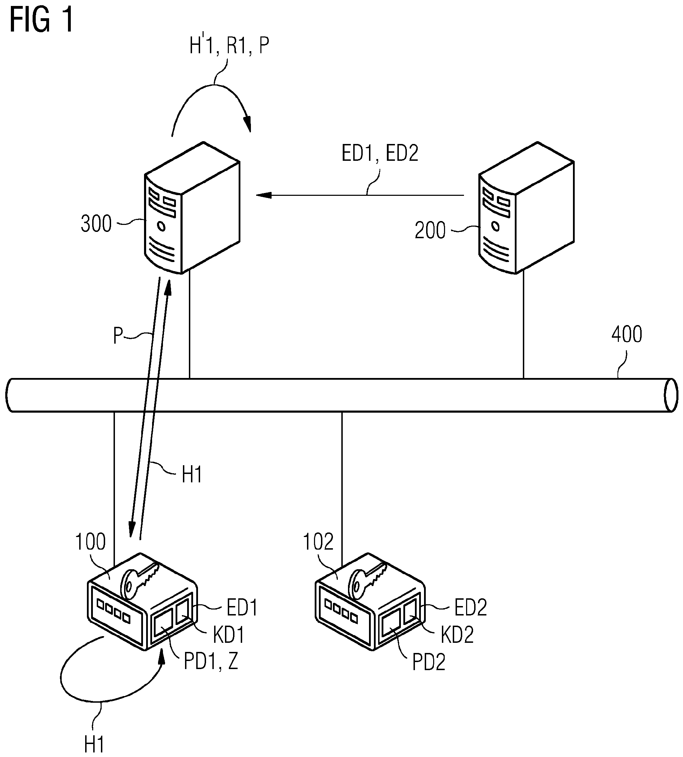

Anhand von Figur 1 werden die grundlegenden Verfahrensschritte und die wesentlichen Komponenten des erfindungsgemäßen Verfahrens vorgestellt.

Innerhalb einer Automatisierungsanlage existieren zahlreiche Geräte wie Mess- oder Steuergeräte, die für einen sicheren und zuverlässigen Betrieb der Anlage auf Manipulationen hin zu überprüfen sind. Zur Überprüfung eines Gerätes 100, das beispielsweise eine Robotersteuerung eines Industrieroboters ist, wird dafür vorgeschlagen, einem Prüfgerät 300, das über ein Netzwerk 400 der Automatisierungsanlage mit dem Gerät 100 gekoppelt ist, von einer Station 200, die über das Netzwerk 400 zumindest mit dem Prüfgerät 300 gekoppelt ist, Eigenschaftsdaten ED1 des Gerätes 100 bereitzustellen. Die Eigenschaftsdaten ED1 ermöglichen eine eindeutige Identifizierung des Gerätes 100, also der Robotersteuerung. Die Station ist dabei als ein Updateserver ausgestaltet, der dem Prüfgerät 300 laufend eine aktuelle Version der Eigenschaftsdaten ED1 liefert. Auch weitere Eigenschaftsdaten ED2 eines weiteren Gerätes 102 innerhalb der Anlage werden dem Prüfgerät 300 von der Station 200 bereitgestellt.

Es erfolgt nun eine Auswertung der dem Prüfgerät 300 bereitgestellten Eigenschaftsdaten ED1 und weiteren Eigenschaftsdaten ED2. Die Eigenschaftsdaten ED1 sowie die weiteren Eigenschaftsdaten ED2 umfassen einen Programmdatensatz PD1 sowie einen Konfigurationsdatensatz KD1 beziehungsweise einen weiteren Programmdatensatz PD2 sowie einen weiteren Konfigurationsdatensatz KD2 des weiteren Gerätes 102. Der Programmdatensatz PD1 enthält eine Angabe der auf der Robotersteuerung befindlichen Firmware. Der Konfigurationsdatensatz enthält einen Geräteidentifizierer und Parameter, die für den Ablauf von Prozessschritten des Industrieroboters vorgegeben wurden.

Die jeweiligen Eigenschaftsdaten, die dem Prüfgerät 300 von der Station 200, in diesem Fall dem Updateserver, bereitgestellt werden, werden nun hinsichtlich mindestens einer Identität von den jeweiligen Programmdatensätzen ausgewertet. In Abhängigkeit von einem Ergebnis des Auswertens wird einem Programmdatensatz eines zu überprüfenden Gerätes, im beschriebenen Beispiel dem Programmdatensatz PD1 des Gerätes 100, eine Kennzeichnung Z zugewiesen. Die Kennzeichnung Z von Programmdatensätzen, bei welchen untereinander eine Identität festgestellt wurde, geschieht dabei dadurch, dass das Prüfgerät 300 ihm bereitgestellte Eigenschaftsdaten logisch gruppiert, beispielsweise ihm bereitgestellte Eigenschaftsdaten mit bereitgestellten Eigenschaftsdaten mit identischem Programmdatensatz in einem gemeinsamen Speicherbereich speichert. Robotersteuerungen einer gemeinsamen Bauserie mit identischen Versionsnummern können so durch das Prüfgerät 300 logisch zusammengefasst werden.

Nun wird auf Basis dieser Kennzeichnung Z durch das Prüfgerät 300 ein Parameter P ermittelt, welcher einerseits an das Gerät 100 übertragen wird zur Berechung eines Hash-Wertes H1 durch das Gerät 100 und andererseits für die Berechnung eines Prüf-Hash-Wertes H'1 durch das Prüfgerät 300 verwendet wird. Die Berechnung des Hash-Wertes H1 auf Seiten des Gerätes 100 sowie des Prüf-Hash-Wertes H'1 auf Seiten des Prüfgerätes 300 erfolgt jeweils in Abhängigkeit von einer Hashfunktion und von einer Zeichenkette. Die Zeichenkette umfasst dabei den Parameter P und die Eigenschaftsdaten ED1, wobei die Zeichenkette jeweils in der Form gehasht wird, dass der Parameter P als erstes übergeben wird und anschließend der Programmdatensatz PD1 sowie der Konfigurationsdatensatz KD1.

Das Gerät 100 kann dabei einen korrekten Hash-Wert, der mit dem vom Prüfgerät 300 berechneten Prüf-Hash-Wert H'1 übereinstimmt, nur dann berechnen, wenn es die Berechnung nach Aufforderung zur Berechnung des Hash-Wertes H1 - dies geschieht durch das Übertragen des Parameters P an das Gerät 100 - mit den aktuell auf dem Gerät 100 befindlichen Eigenschaftsdaten ED1 durchführt. Ein innerer Zustand des Hashverfahrens in Abhängigkeit von den Eigenschaftsdaten ED1 kann somit nicht sinnvoll vorberechnet und gespeichert werden. Wenn ein für jedes Prüfverfahren neu ermittelter Parameter P, beispielsweise eine Zufallszahl, in die Berechnung mit einfließt und zu Beginn der Zeichenkette übergeben wird, kann nicht mit ursprünglich unmanipulierten Eigenschaftsdaten ED1 ein innerer Zustand des Hashverfahrens berechnet werden, der auch nach Manipulation der Eigenschaftsdaten ED1 noch einen korrekten Hash-Wert liefern würde, wie dies bei einem Verfahren möglich wäre, bei welchem der Parameter P am Ende der Zeichenkette steht.

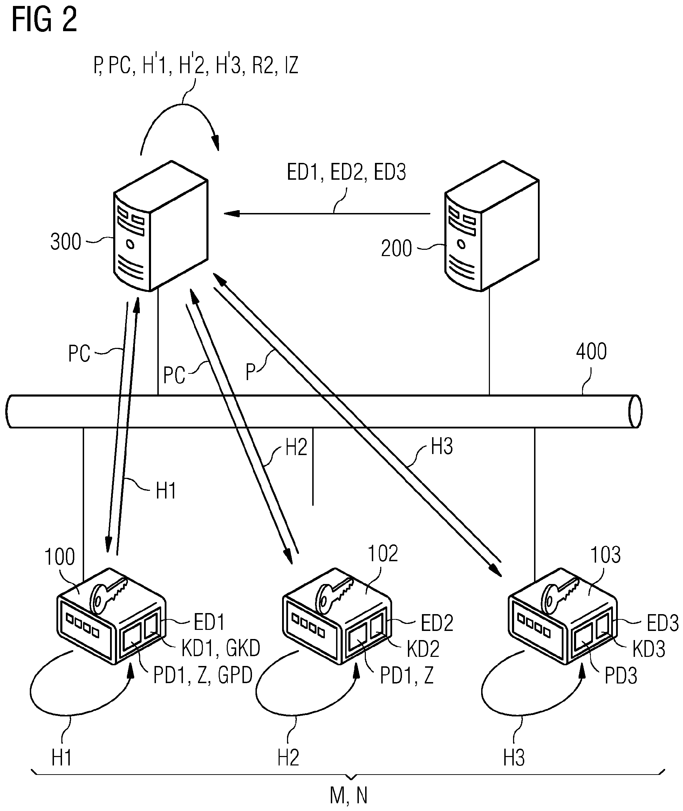

Eine Einbeziehung der weiteren Geräte innerhalb der Anlage bei der Ermittlung des Parameters P bringt für das Prüfgerät eine Reduzierung des Rechenaufwandes mit sich, wie im Folgenden anhand von Figur 2 näher erläutert wird.

Es wird ein Ausführungsbeispiel anhand von drei zu überprüfenden Geräten erläutert. Analog zum oben beschriebenen Fall stellt die Station 200 Eigenschaftsdaten bereit, das heißt in diesem Fall die Eigenschaftsdaten ED1, die weiteren Eigenschaftsdaten ED2 sowie dritte Eigenschaftsdaten ED3. Die Eigenschaftsdaten ED1 umfassen den Programmdatensatz PD1 sowie den Konfigurationsdatensatz KD1, die weiteren Eigenschaftsdaten ED2 umfassen ebenfalls den Programmdatensatz PD1, der mit dem Programmdatensatz PD1 von dem Gerät 100 identisch ist, sowie den weiteren Konfigurationsdatensatz KD2 und die dritten Eigenschaftsdaten ED3 umfassen einen dritten Programmdatensatz PD3 sowie einen dritten Konfigurationsdatensatz KD3. Das Prüfgerät 300 nimmt nun eine Kennzeichnung der Eigenschaftsdaten ED1 sowie der weiteren Eigenschaftsdaten ED2 vor, da die Auswertung der jeweiligen Eigenschaftsdaten die Identität der jeweiligen Programmdatensätze ergeben hat.

An das Gerät 100 und an das weitere Gerät 102 wird nun ein identischer Parameter PC übermittelt aufgrund der identischen Programmdatensätze. Wurde für das dritte Gerät 103 keine Identität des dritten Programmdatensatz PD3 mit einem der anderen Programmdatensätze der zu überprüfenden Geräte festgestellt, so wird dem dritten Gerät 103 ein beliebiger Parameter P übermittelt. Das Gerät 100, das weitere Gerät 102 und das dritte Gerät 103 berechnen analog zu dem oben beschriebenen Verfahren den Hash-Wert H1, einen weiteren Hash-Wert H2 und einen dritten Hash-Wert H3. Es erfolgt jeweils die Übermittlung der berechneten Hash-Werte von den jeweiligen Geräten an das Prüfgerät 300.

Das Prüfgerät 300 kann einen jeweiligen Prüf-Hash-Wert nun nach einem vereinfachten Verfahren berechnen. Für den ihm übermittelten Programmdatensatz PD1 berechnet das Prüfgerät 300 nun zunächst einen inneren Zustand IZ, der von der Hashfunktion, dem jeweiligen Parameter PC und dem Programmdatensatz PD1 abhängt. Dieser innere Zustand IZ wird gespeichert und es erfolgt im Anschluss die Berechnung des Prüf-Hash-Wertes H'1, wobei der Prüf-Hash-Wert H'1 in Abhängigkeit von der Hash-Funktion, dem inneren Zustand IZ und dem Konfigurationsdatensatz KD1 berechnet wird.

Für die Berechnung des Prüf-Hash-Wertes H'2 des weiteren Gerätes 102 wird ebenfalls der innere Zustand IZ verwendet, so dass nur noch ein Hashen des weiteren Konfigurationsdatensatzes KD2 nötig ist.

Dieses Verfahren kann auf beliebig große Gerätezahlen ausgeweitet werden, wobei eine Berechnung und Speicherung des inneren Zustands IZ immer je übermittelten Programmdaten geschieht. Diese Zusammenfassung der Berechnung des inneren Zustandes geschieht unabhängig von der Anzahl vorhandener Geräte. Je mehr Geräte über dieses Verfahren zusammengefasst werden können, desto größer wird die Reduzierung des Rechenaufwandes.

Bei großen Gerätezahlen stellt dieses Verfahren also für das Prüfgerät 300 eine große Vereinfachung dar, was anhand von folgendem Zahlenbeispiel veranschaulicht werden soll.

Eine Größe von Programmdaten eines Gerätes, wie beispielsweise Firmware oder Software, ist stark geräteabhängig und kann von einigen kB (zum Beispiel für RFID-Tags) bis hin zu einigen Dutzend MB (zum Beispiel im Falle intelligenter Feldgeräte oder speicherprogrammierbarer Steuerungen) reichen. Für das Zahlenbeispiel soll eine durchschnittliche Größe von Programmdaten GPD von GPD=32MB angenommen werden. Es soll angenommen werden, dass innerhalb einer Anlage eine Programmdatenanzahl M verschiedener Programmdatensätze, insbesondere verschiedene Baureihen, mit M=10 existieren.

Eine durchschnittliche Größe von Konfigurationsdaten GKD ist typischerweise geringer als die der Programmdaten und beträgt im Beispiel GKD=0,1MB. Eine Anzahl verschiedener Geräte, beispielsweise eine Anzahl von 1000 Geräten innerhalb einer Anlage bedeutet eine Konfigurationsdatenanzahl N von N=1000.

Für eine Überprüfungsmethode ohne Verwendung eines inneren Zustandes IZ für zu überprüfende Geräte mit identischem Programmdatensatz setzt sich die zu hashende Datenmenge G1 für das Prüfgerät 300 zusammen aus:

$$N \cdot GPD + N \cdot GKD = G1$$

Dies entspricht dem Fall, wenn für jedes Gerät einer Anlage ein Hash-Wert errechnet werden muss und sich die zu hashende Datenmenge G1 als Summe aus dem Produkt von Konfigurationsdatenanzahl N und der durchschnittlichen Größe von Programmdaten GPD und dem Produkt von Konfigurationsdatenanzahl N und der durchschnittlichen Größe von Konfigurationsdaten GKD zusammensetzt.

Berechnet das Prüfgerät 300 zunächst nur für jeden unterschiedlichen Programmdatensatz einen inneren Zustand IZ und im Anschluss den Hash-Wert über die Konfigurationsdaten so ergibt sich folgende weitere zu hashende Datenmenge G2:

$$M \cdot GPD + N \cdot GKD = G2$$

Für die Variante ohne Verwendung des inneren Zustands IZ bedeutet dies im Zahlenbeispiel eine zu hashende Datenmenge G1 von:

$$1000 \cdot 32MB + 1000 \cdot 0,1MB = 32100MB$$

Die weitere zu hashende Datenmenge G2 mit Verwendung des inneren Zustandes IZ beträgt dagegen nur:

$$10 \cdot 32MB + 1000 \cdot 0,1MB = 420\ MB$$

Die zu hashende Datenmenge ist dabei jeweils mit einem Rechenaufwand korreliert, der im Falle der Berechnung eines inneren Zustandes IZ entsprechend der kleineren zu hashenden Datenmenge ebenfalls kleiner ist, sodass die Überprüfung von Geräten schneller erfolgt.

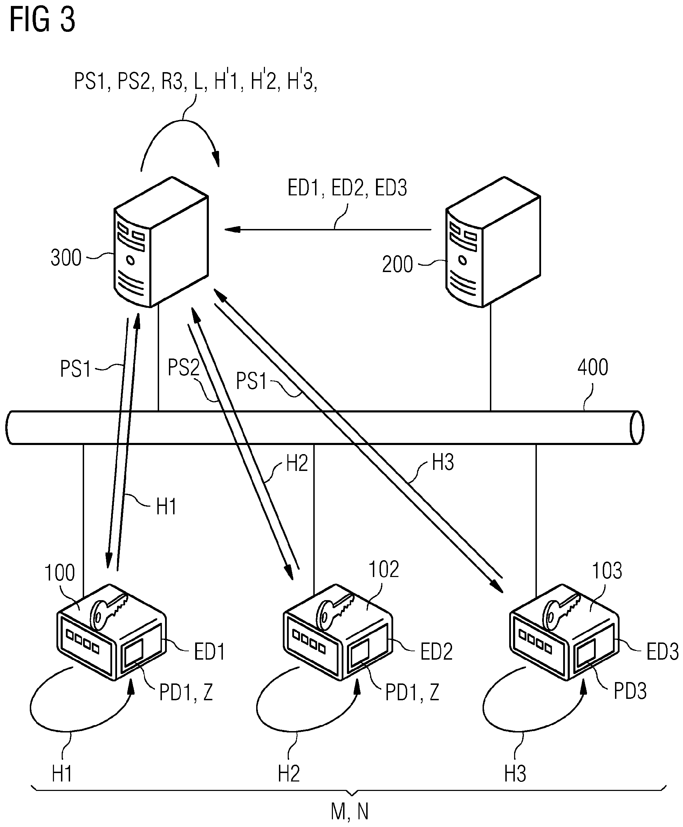

Für eine erhöhte Sicherheitsanforderung wird in einem weiteren Ausführungsbeispiel anhand von Figur 3 erläutert, wie dennoch der Rechenaufwand für ein Prüfgerät 300 gering gehalten werden kann. Dabei werden im Falle einer Kennzeichnung Z von Eigenschaftsdaten mit identischen Programmdatensätzen teilweise unterschiedliche Parameter an die Geräte mit gekennzeichneten Eigenschaftsdaten übertragen. In Figur 3 ist dargestellt, wie ein Gerät 100 mit Eigenschaftsdaten ED1 und einem Programmdatensatz PD1 ein einmaliger Parameter PS1 übertragen wird, wobei einem weiteren Gerät 102 mit weiteren Eigenschaftsdaten ED2 und einem mit dem Programmdatensatz PD1 des Gerätes 100 identischen Programmdatensatz PD1 ein weiterer einmaliger Parameter PS2 übermittelt wird. Für ein drittes Gerät 103 mit dritten Eigenschaftsdaten ED3 und einem dritten Programmdatensatz PD3, der nicht mit einem der Programmdatensätze der übrigen Geräte übereinstimmt, kann ein beliebiger dritter einmaliger Parameter PS3 übermittelt werden, der mit einem der übrigen übermittelten Parameter übereinstimmen kann. Dabei stehen dem Prüfgerät 300 bei der Wahl eines zu versendenden einmaligen Parameters beispielsweise einige Zufallszahlen aus einer kleinen Anzahl von Zufallszahlen L zur Verfügung.

Der Rechenaufwand für das Prüfgerät nach dieser Methode erhöht sich dadurch, da je in der Anlage vorkommendem Programmdatensatz nun ein innerer Zustand je möglicher Zufallszahl berechnet werden muss. Es ergibt sich eine dritte zu hashende Datenmenge G3:

$$L \cdot M \cdot GPD + N \cdot GKD = G3$$

Im oben gewählten Zahlenbeispiel ergibt sich damit bei einer Auswahl der Zufallszahl zwischen L=10 verschiedenen Zufallszahlen eine dritte zu hashende Datenmenge G3 von:

$$10 \cdot 10 \cdot 32MB + 1000 \cdot 0,1MB = 3300MB$$

Es handelt sich hierbei um ein Verfahren mit erhöhter Sicherheit, da nun eine Absprache manipulierter Geräte erschwert wird, welche sich zur Ermittlung eines korrekten Hash-Wertes austauschen. Können beispielsweise mehrere manipulierte Geräte gemeinsam einen originalen Programmdatensatz rekonstruieren. Obwohl der Programmdatensatz je Gerät jeweils verändert wurde, ist es dennoch möglich, in Kooperation einen korrekten Hash-Wert zu berechnen. Werden allerdings unterschiedliche Zufallszahlen an die Geräte übertragen, so wird diese Abstimmung erschwert. Jedes Gerät muss nun schon aufgrund der nicht als gleich anzunehmenden Zufallszahl einen individuell korrekten Hash-Wert errechnen, wobei auch der innere Zustand IZ, insbesondere in Abhängigkeit von der Zufallszahl und dem Programmdatensatz, bereits individuell korrekt ermittelt werden muss.

Bei großer zur Verfügung stehender Rechenkapazität einer Prüfinstanz ist es ferner denkbar, an alle zu überprüfenden Geräte innerhalb einer Anlage einen unterschiedlichen Parameter P zu senden. Dieses Verfahren kann von dem Prüfgerät 300 insbesondere gewählt werden, falls ausreichend Zeit für die Berechnung der Prüf-Hash-Werte zur Verfügung steht oder eine Generalüberprüfung mit sehr hohen Sicherheitsanforderungen ansteht. Die für jedes zu überprüfende Gerät individuellen Parameter P werden dann innerhalb eines vorgebbaren Zeitfensters übertragen.

Eine Integrität der Eigenschaftsdaten eines zu überprüfenden Gerätes wird nur in dem Fall bestätigt, dass eine Antwort in Form des von dem zu überprüfenden Gerät ermittelten und übertragenen Hash-Wert innerhalb eines vorgegebenen Antwortzeitfensters erfolgt.

Dabei kann das Prüfgerät berücksichtigen, dass manche zu überprüfenden Geräte mit einer erhöhten Auslastung ihres Prozessors - beispielsweise aufgrund von umfangreichen Funktionen oder geringerer vorhandener Rechenkapazität - eine entsprechend längere Antwortzeit benötigen, und kann entweder das Antwortzeitfenster gerätespezifisch anpassen oder eine Überprüfungsanfrage in Form eines übermittelten Parameters für diese Geräte entsprechend früher starten. Für das Prüfgerät 300 bedeutet dieses Verfahren einen enorm hohen Rechenaufwand, so dass es vorteilhaft ist, die Berechnung von zu berechnenden Prüf-Hash-Werten im Voraus, das heißt vor dem Versenden der Parameter, auszuführen.

Weiterleitungsangriffe innerhalb einer Anlage werden durch dieses Verfahren erschwert, da eine nahezu gleichzeitige Überprüfung aller Geräte innerhalb der Anlage gestartet wird und jedes Gerät innerhalb eines vorgegebenen Antwortzeitfensters antworten muss.

Die vorgestellten Ausführungsbeispiele lassen sich in vorteilhafter Weise miteinander kombinieren: Dazu kann das Prüfgerät als Standardeinstellung die Methode wählen, bei welcher eine Prüf-Hash-Wertberechnung von Geräten mit identischen Programmdatensätzen zusammengefasst wird, an diese Geräte ein identischer Parameter PC gesendet und ein innerer Zustand IZ berechnet wird, so dass der Rechenaufwand für das Prüfgerät auch bei vielen parallel zu überprüfenden Geräten gering gehalten wird. Bei einem Verdacht auf Manipulation einer Gerätegruppe mit identischen Programmdatensätzen kann gezielt auf die Methode zurückgegriffen werden, bei welcher an Geräte mit identischen Programmdatensätzen unterschiedliche Parameter PS1, PS2 übertragen werden. Auch bei einer Installation einer neuen Gerätegruppe innerhalb der Anlage kann dies vorteilhaft sein.

So können innerhalb einer Anlage unterschiedliche Sicherheitsniveaus für unterschiedliche Sicherheitsanforderungen erfüllt werden, indem die Anzahl der verwendeten Parameter, insbesondere der verwendeten Zufallszahlen, variiert wird. Auch unbeabsichtigte Softwareveränderungen, beispielsweise durch Speicherfehler, oder durch Vor-Ort-Konfiguration eines Service-Technikers und mangelnden Abgleich mit der Engineering-Station entstandene Nichtübereinstimmungen zwischen der angenommenen, in der Engineering-Station gespeicherten Software bzw. Konfiguration und der tatsächlichen, im Gerät vorhandenen Software bzw. Konfiguration werden erkannt. Die Kombination der unterschiedlichen vorgestellten Verfahren erlaubt eine effiziente Überprüfung in Anlagen mit einer großen Anzahl an installierten Geräten.

Die Einheiten Gerät 100, weiteres Gerät 102, drittes Gerät 103, Prüfgerät 300 und Station 200 sowie die weitere Einheit können in Software, Hardware oder in einer Kombination aus Soft- und Hardware realisiert und ausgeführt werden.

So können die durch die Einheiten realisierten Schritte als Programmcode auf einem Speichermedium, insbesondere einer Festplatte, CD-Rom oder einem Speichermodul abgelegt sein, wobei die einzelnen Anweisungen des Programmcodes von mindestens einer Recheneinheit, umfassend einen Prozessor, ausgelesen und verarbeitet werden. Der Prozessor ist mit dem Speichermedium über einen Bus zum Datenaustausch verbunden.

Ferner kann eine Ein-/Ausgabeeinheit über den Bus angeschlossen werden, wobei mittels der Ein-/Ausgabeeinheit Daten, wie beispielsweise Eigenschaftsdaten, ein Parameter, ein Hash-Wert oder ein Prüf-Hash-Wert, empfangen und oder versendet werden können.

Die beschriebenen Ausführungsformen und Weiterbildungen lassen sich frei miteinander kombinieren.

**Patentansprüche**

1. Verfahren zum Überprüfen einer Integrität von Eigenschaftsdaten (ED1) eines Gerätes (100), wobei die Eigenschaftsdaten (ED1) einen Programmdatensatz (PD1) und einen Konfigurationsdatensatz (KD1) umfassen, durch ein Prüfgerät (300) innerhalb eines Netzwerkes (400), welches das Gerät (100), das Prüfgerät (300) und mindestens ein weiteres Gerät (102) mit weiteren Eigenschaftsdaten (ED2) umfasst, wobei die weiteren Eigenschaftsdaten (ED2) einen weiteren Programmdatensatz (PD2) und einen weiteren Konfigurationsdatensatz (KD2) umfassen, mit den Schritten:

    - Bereitstellen der Eigenschaftsdaten (ED1) und der weiteren Eigenschaftsdaten (ED2) durch eine Station (200), welche zumindest mit dem Prüfgerät (300) mittels des Netzwerkes (400) gekoppelt ist;
    - Auswerten der Eigenschaftsdaten (ED1) und der weiteren Eigenschaftsdaten (ED2) durch das Prüfgerät (300) hinsichtlich mindestens einer Identität von dem Programmdatensatz (PD1) und dem weiteren Programmdatensatz (PD2), und Zuweisen einer Kennzeichnung (Z) in Abhängigkeit von einem Ergebnis des Auswertens;
    - Ermitteln eines Parameters (P, PC, PS1), welcher dazu geeignet ist, einen Hash-Wert (H1) und einen Prüf-Hash-Wert (H'1) einer Hash-Funktion zu beeinflussen, durch das Prüfgerät (300), wobei der Parameter (P, PC, PS1) in Abhängigkeit von der Kennzeichnung (Z) ausgestaltet wird, und Übertragen des Parameters (P, PC, PS1) an das Gerät (100);
    - Berechnen des Hash-Wertes (H1) durch das Gerät (100) in Abhängigkeit von der Hash-Funktion und von einer Zeichenkette, wobei die Zeichenkette den Parameter (P, PC, PS1) und die Eigenschaftsdaten (ED1) umfasst und eine Reihenfolge innerhalb der Zeichenkette vorgebbar ist, und Übertragen des Hash-Wertes (H1) an das Prüfgerät (300);
    - Berechnen des Prüf-Hash-Wertes (H'1) durch das Prüfgerät (300) in Abhängigkeit von der Hash-Funktion und von der Zeichenkette, wobei die Zeichenkette den Parameter (P, PC, PS1) und die Eigenschaftsdaten (ED1) umfasst und eine Reihenfolge innerhalb der Zeichenkette vorgebbar ist;
    - Bestätigen der Integrität der Eigenschaftsdaten (ED1) durch das Prüfgerät (300), falls der Hash-Wert (H1) mit dem Prüf-Hash-Wert (H'1) übereinstimmt.

2. Verfahren nach einem der vorstehenden Ansprüche, wobei der Parameter (P, PC, PS1) zu Beginn der Zeichenkette übergeben wird.

3. Verfahren nach einem der vorstehenden Ansprüche, wobei der Parameter (P, PC, PS1) als eine Zufallszahl ausgebildet ist, dessen Länge an den Hash-Wert (H1) angepasst wird.

4. Verfahren nach einem der vorstehenden Ansprüche, wobei der Parameter (P, PC, PS1) und/oder der Hash-Wert (H1) kryptographisch gesichert übertragen werden.

5. Verfahren nach einem der vorstehenden Ansprüche, wobei an das Gerät (100) und das mindestens eine weitere Gerät (102) ein identischer Parameter (PC) übertragen wird.

6. Verfahren nach Anspruch 5, wobei das Prüfgerät (300) für die Berechnung des Prüf-Hash-Wertes (H'1) in Abhängigkeit von der Kennzeichnung (Z) einen inneren Zustand (IZ) berechnet in Abhängigkeit von der Hash-Funktion, dem Parameter (PC) und dem Programmdatensatz (PD1) und den inneren Zustand (IZ) speichert.

7. Verfahren nach einem der Ansprüche 1 bis 4, wobei das Prüfgerät (300) einen einmaligen Parameter (PS1) an das Gerät (100) und einen weiteren einmaligen Parameter (PS2) an das mindestens eine weitere Gerät (102) überträgt und wobei der einmalige Parameter (PS1) und der weitere einmalige Parameter (PS2) innerhalb eines vorgebbaren Zeitfensters übertragen werden.

8. Verfahren nach einem der Ansprüche 1 bis 4, wobei das Prüfgerät (300) einen einmaligen Parameter (PS1) an das Gerät (100) und einen weiteren einmaligen Parameter (PS2) an das mindestens eine weitere Gerät (102) überträgt, in Abhängigkeit von der Kennzeichnung (Z).

9. Verfahren nach einem der vorstehenden Ansprüche, wobei die Integrität des Gerätes (100) durch das Prüfgerät (300) bestätigt wird, wenn das Berechnen und Übertragen des Hash-Wertes (H1) durch das Gerät (100) innerhalb eines individuell vorgebbaren Antwortzeitfensters erfolgt.

10. Verfahren nach einem der Ansprüche 7 oder 8, wobei das Prüfgerät (300) den Prüf-Hash-Wertes (H'1) vor oder nach dem Übertragen des einmaligen Parameters (PS1) berechnet.

11. Prüfsystem zum Überprüfen einer Integrität von Eigenschaftsdaten (ED1) eines Gerätes (100), wobei die Eigenschaftsdaten (ED1) einen Programmdatensatz (PD1) und einen Konfigurationsdatensatz (KD1) umfassen, durch ein Prüfgerät (300) innerhalb eines Netzwerkes (400), welches das Gerät (100), das Prüfgerät (300) und mindestens ein weiteres Gerät (102) mit weiteren Eigenschaftsdaten (ED2) umfasst, wobei die weiteren Eigenschaftsdaten (ED2) einen weiteren Programmdatensatz (PD2) und einen weiteren Konfigurationsdatensatz (KD2) umfassen, umfassend:

    - eine Station (200) zum Bereitstellen der Eigenschaftsdaten (ED1) und der weiteren Eigenschaftsdaten (ED2), wobei die Station (200) zumindest mit dem Prüfgerät (300) mittels des Netzwerkes (400) gekoppelt ist;
    - das Prüfgerät (300) zum Auswerten der Eigenschaftsdaten (ED1) und der weiteren Eigenschaftsdaten (ED2) hinsichtlich mindestens einer Identität von dem Programmdatensatz (PD1) und dem weiteren Programmdatensatz (PD2) und
    Zuweisen einer Kennzeichnung (Z) in Abhängigkeit von einem Ergebnis des Auswertens,
    Ermitteln eines Parameters (P, PC, PS1), welcher dazu geeignet ist, einen Hash-Wert (H1) und einen Prüf-Hash-Wert (H'1) einer Hash-Funktion zu beeinflussen, wobei der Parameter (P, PC, PS1) in Abhängigkeit von der Kennzeichnung (Z) ausgestaltet wird,
    Übertragen des Parameters (P, PC, PS1) an das Gerät (100),
    Berechnen des Prüf-Hash-Wertes (H'1) in Abhängigkeit von der Hash-Funktion und von einer Zeichenkette, wobei die Zeichenkette den Parameter (P, PC, PS1) und die Eigenschaftsdaten (ED1) umfasst und eine Reihenfolge innerhalb der Zeichenkette vorgebbar ist, und
    Bestätigen der Integrität der Eigenschaftsdaten (ED1), falls der Hash-Wert (H1) mit dem Prüf-Hash-Wert (H'1) übereinstimmt;

    - das Gerät (100) zum
    Berechnen des Hash-Wertes (H1) in Abhängigkeit von der Hash-Funktion und von einer Zeichenkette, wobei die Zeichenkette den Parameter (P, PC, PS1) und die Eigenschaftsdaten (ED1) umfasst und eine Reihenfolge innerhalb der Zeichenkette vorgebbar ist, und
    Übertragen des Hash-Wertes (H1) an das Prüfgerät (300).

12. Prüfsystem nach Anspruch 11, ferner mindestens eine weitere Einheit umfassend zur Verwendung in einem der Verfahrensschritte gemäß den Ansprüchen 2 bis 10.

13. Prüfsystem nach Anspruch 11 oder 12, wobei das Prüfgerät (300) und die Station (200) als gemeinsame Einheit ausgestaltet sind.

## Claims

1. Method for checking integrity of property data (ED1) relating to a device (100), the property data (ED1) comprising a program data record (PD1) and a configuration data record (KD1), by means of a testing device (300) inside a network (400) comprising the device (100), the testing device (300) and at least one further device (102) having further property data (ED2), the further property data (ED2) comprising a further program data record (PD2) and a further configuration data record (KD2), having the following steps:

    - provision of the property data (ED1) and the further property data (ED2) by a station (200) which is coupled at least to the testing device (300) by means of the network (400) ;
    - evaluation of the property data (ED1) and the further property data (ED2) by the testing device (300) with regard to at least identity of the program data record (PD1) and the further program data record (PD2), and allocation of an identification (Z) on the basis of an evaluation result;
    - determination of a parameter (P, PC, PS1), which is suitable for influencing a hash value (H1) and a test hash value (H'1) of a hash function, by the testing device (300), the parameter (P, PC, PS1) being configured on the basis of the identification (Z), and transmission of the parameter (P, PC, PS1) to the device (100);
    - calculation of the hash value (H1) by the device (100) on the basis of the hash function and a character string, the character string comprising the parameter (P, PC, PS1) and the property data (ED1) and a sequence inside the character string being able to be predefined, and transmission of the hash value (H1) to the testing device (300);
- calculation of the test hash value (H'1) by the testing device (300) on the basis of the hash function and the character string, the character string comprising the parameter (P, PC, PS1) and the property data (ED1) and a sequence inside the character string being able to be predefined;
- confirmation of the integrity of the property data (ED1) by the testing device (300) if the hash value (H1) matches the test hash value (H'1).

2. Method according to one of the preceding claims, the parameter (P, PC, PS1) at the start of the character string being transferred.

3. Method according to one of the preceding claims, the parameter (P, PC, PS1) being in the form of a random number whose length is adapted to the hash value (H1).

4. Method according to one of the preceding claims, the parameter (P, PC, PS1) and/or the hash value (H1) being transmitted in a cryptographically secure manner.

5. Method according to one of the preceding claims, an identical parameter (PC) being transmitted to the device (100) and to the at least one further device (102).

6. Method according to Claim 5, the testing device (300) calculating an inner state (IZ) on the basis of the hash function, the parameter (PC) and the program data record (PD1) for the purpose of calculating the test hash value (H'1) on the basis of the identification (Z) and storing the inner state (IZ).

7. Method according to one of Claims 1 to 4, the testing device (300) transmitting a unique parameter (PS1) to the device (100) and transmitting a further unique parameter (PS2) to the at least one further device (102), and the unique parameter (PS1) and the further unique parameter (PS2) being transmitted within a predefinable time window.

8. Method according to one of Claims 1 to 4, the testing device (300) transmitting a unique parameter (PS1) to the device (100) and transmitting a further unique parameter (PS2) to the at least one further device (102) on the basis of the identification (Z).

9. Method according to one of the preceding claims, the integrity of the device (100) being confirmed by the testing device (300) if the device (100) calculates and transmits the hash value (H1) within an individually predefinable response time window.

10. Method according to either of Claims 7 and 8, the testing device (300) calculating the test hash value (H'1) before or after transmitting the unique parameter (PS1).

11. Testing system for checking integrity of property data (ED1) relating to a device (100), the property data (ED1) comprising a program data record (PD1) and a configuration data record (KD1), by means of a testing device (300) inside a network (400) comprising the device (100), the testing device (300) and at least one further device (102) having further property data (ED2), the further property data (ED2) comprising a further program data record (PD2) and a further configuration data record (KD2), comprising:

- a station (200) for providing the property data (ED1) and the further property data (ED2), the station (200) being coupled at least to the testing device (300) by means of the network (400);
- the testing device (300) for
evaluating the property data (ED1) and the further property data (ED2) with regard to at least identity of the program data record (PD1) and the further program data record (PD2) and allocating an identification (Z) on the basis of an evaluation result,
determining a parameter (P, PC, PS1) which is suitable for influencing a hash value (H1) and a test hash value (H'1) of a hash function, the parameter (P, PC, PS1) being configured on the basis of the identification (Z),
transmitting the parameter (P, PC, PS1) to the device (100), calculating the test hash value (H'1) on the basis of the hash function and a character string, the character string comprising the parameter (P, PC, PS1) and the property data (ED1) and a sequence inside the character string being able to be predefined, and
confirming the integrity of the property data (ED1) if the hash value (H1) matches the test hash value (H'1);
- the device (100) for
calculating the hash value (H1) on the basis of the hash function and a character string, the character string comprising the parameter (P, PC, PS1) and the property data (ED1) and a sequence inside the character string being able to be predefined, and
transmitting the hash value (H1) to the testing device (300).

12. Testing system according to Claim 11, also comprising at least one further unit for use in one of the method steps according to Claims 2 to 10.

13. Testing system according to Claim 11 or 12, the testing device (300) and the station (200) being in the form of a common unit.

**Revendications**

1. Procédé permettant de vérifier une intégrité de données sur les propriétés (ED1) d'un appareil (100), dans lequel les données sur les propriétés (ED1) comprennent un ensemble de données de programme (PD1) et un ensemble de données de configuration (KD1), grâce à un appareil de test (300) au sein d'un réseau (400) qui comprend l'appareil (100), l'appareil de test (300) et au moins un autre appareil (102) avec d'autres données sur les propriétés (ED2), dans lequel les autres données sur les propriétés (ED2) comprennent un autre ensemble de données de programme (PD2) et un autre ensemble de données de configuration (KD2), comprenant les étapes consistant à :

   - mettre à disposition les données sur les propriétés (ED1) et les autres données sur les propriétés (ED2) grâce à une station (200) qui est couplée au moins à l'appareil de test (300) au moyen du réseau (400) ;
   - évaluer les données sur les propriétés (ED1) et les autres données sur les propriétés (ED2) grâce à l'appareil de test (300) en ce qui concerne au moins une identité de l'ensemble de données de programme (PD1) et de l'autre ensemble de données de programme (PD2), et affecter une caractérisation (Z) en fonction d'un résultat de l'évaluation ;
   - déterminer un paramètre (P, PC, PS1) approprié pour influencer une valeur de hachage (H1) et une valeur de hachage de test (H'1) d'une fonction de hachage, grâce à l'appareil de test (300), dans lequel le paramètre (P, PC, PS1) est formulé en fonction de la caractérisation (Z), et transmettre le paramètre (P, PC, PS1) à l'appareil (100) ;
   - calculer la valeur de hachage (H1) grâce à l'appareil (100) en fonction de la fonction de hachage et d'une chaîne de caractères, dans lequel la chaîne de caractères comprend le paramètre (P, PC, PS1) et les données sur les propriétés (ED1), et une séquence peut être spécifiée au sein de la chaîne de caractères, et transmettre la valeur de hachage (H1) à l'appareil de test (300) ;
   - calculer la valeur de hachage de test (H'1) grâce à l'appareil de test (300) en fonction de la fonction de hachage et de la chaîne de caractères, dans lequel la chaîne de caractères comprend le paramètre (P, PC, PS1) et les données sur les propriétés (ED1), et une séquence peut être spécifiée au sein de la chaîne de caractères ;
   - confirmer l'intégrité des données sur les propriétés (ED1) grâce à l'appareil de test (300), dans le cas où la valeur de hachage (H1) coïncide avec la valeur de hachage de test (H'1).

2. Procédé selon l'une quelconque des revendications précédentes, dans lequel le paramètre (P, PC, PS1) est fourni au début de la chaîne de caractères.

3. Procédé selon l'une quelconque des revendications précédentes, dans lequel le paramètre (P, PC, PS1) est conçu sous forme d'un nombre aléatoire dont la longueur est adaptée à la valeur de hachage (H1).

4. Procédé selon l'une quelconque des revendications précédentes, dans lequel le paramètre (P, PC, PS1) et/ou la valeur de hachage (H1) est/sont transmis de manière sécurisée par cryptographie.

5. Procédé selon l'une quelconque des revendications précédentes, dans lequel un paramètre (P, PC, PS1) identique est transmis à l'appareil (100) et au au moins un autre appareil (102).

6. Procédé selon la revendication 5, dans lequel l'appareil de test (300) destiné au calcul de la valeur de hachage de test (H'1) en fonction de la caractérisation (Z) calcule un état interne (IZ) en fonction de la fonction de hachage, du paramètre (PC) et de l'ensemble de données de programme (PD1) et mémorise ledit état interne (IZ).

7. Procédé selon l'une quelconque des revendications 1 à 4, dans lequel l'appareil de test (300) transmet un paramètre unique (PS1) à l'appareil (100) et un autre paramètre unique (PS2) au au moins un autre appareil (102) et dans lequel le paramètre unique (PS1) et l'autre paramètre unique (PS2) sont transmis à l'intérieur d'une fenêtre temporelle pouvant être spécifiée.

8. Procédé selon l'une quelconque des revendications 1 à 4, dans lequel l'appareil de test (300) transmet un paramètre unique (PS1) à l'appareil (100) et un autre paramètre unique (PS2) au au moins un autre appareil (102), en fonction de la caractérisation (Z).

9. Procédé selon l'une quelconque des revendications précédentes, dans lequel l'intégrité de l'appareil (100) est confirmée grâce à l'appareil de test (300) lorsque le calcul et la transmission de la valeur de hachage (H1) grâce à l'appareil (100) a lieu à l'intérieur d'une fenêtre temporelle de réponse pouvant être spécifiée de manière individuelle.

10. Procédé selon la revendication 7 ou 8, dans lequel l'appareil de test (300) calcule la valeur de hachage de test (H'1) avant ou après la transmission du paramètre unique (PS1).

11. Système de test permettant de vérifier une intégrité de données sur les propriétés (ED1) d'un appareil (100), dans lequel les données sur les propriétés (ED1) comprennent un ensemble de données de programme (PD1) et un ensemble de données de configuration (KD1), grâce à un appareil de test (300) à l'intérieur d'un réseau (400) qui comprend l'appareil (100), l'appareil de test (300) et au moins un autre appareil (102) avec d'autres données sur les propriétés (ED2), dans lequel les autres données sur les propriétés (ED2) comprennent un autre ensemble de données de programme (PD2) et un autre ensemble de données de configuration (KD2), comprenant :

- une station (200) permettant de mettre à disposition les données sur les propriétés (ED1) et les autres données sur les propriétés (ED2), dans lequel la station (200) est couplée au moins à l'appareil de test (300) au moyen du réseau (400) ;
- l'appareil de test (300) permettant de évaluer les données sur les propriétés (ED1) et les autres données sur les propriétés (ED2) en ce qui concerne au moins une identité de l'ensemble de données de programme (PD1) et de l'autre ensemble de données de programme (PD2), et de affecter une caractérisation (Z) en fonction d'un résultat de l'évaluation, déterminer un paramètre (P, PC, PS1) qui est approprié pour influencer une valeur de hachage (H1) et une valeur de hachage de test (H'1) d'une fonction de hachage, dans lequel le paramètre (P, PC, PS1) est formulé en fonction de la caractérisation (Z), transmettre le paramètre (P, PC, PS1) à l'appareil (100), calculer la valeur de hachage de test (H'1) en fonction de la fonction de hachage et d'une chaîne de caractères, dans lequel la chaîne de caractères comprend le paramètre (P, PC, PS1) et les données sur les propriétés (ED1), et une séquence peut être spécifiée à l'intérieur de la chaîne de caractères, et confirmer l'intégrité des données sur les propriétés (ED1), dans le cas où la valeur de hachage (H1) coïncide avec la valeur de hachage de test (H'1) ;
- l'appareil (100) permettant de calculer la valeur de hachage (H1) en fonction de la fonction de hachage et d'une chaîne de caractères, dans lequel la chaîne de caractères comprend le paramètre (P, PC, PS1) et les données sur les propriétés (ED1), et une séquence peut être spécifié à l'intérieur de la chaîne de caractères, et de transmettre la valeur de hachage (H1) à l'appareil de test (300).

**12.** Système de test selon la revendication 11, comprenant en outre au moins une autre unité destinée à être utilisée dans l'une des étapes de procédé selon l'une quelconque des revendications 2 à 10.

**13.** Système de test selon la revendication 11 ou 12, dans lequel l'appareil de test (300) et la station (200) sont conçus en tant qu'unité commune.

EP 2 870 565 B1

FIG 1

H'1, R1, P

ED1, ED2

300

200

400

P

H1

100

102

ED1
KD1
PD1, Z

ED2
KD2
PD2

H1

14

FIG 2

P, PC, H'1, H'2, H'3, R2, IZ

ED1, ED2, ED3

300

200

400

PC

PC

P

H2

H3

H1

100

102

103

ED1
KD1, GKD
PD1, Z, GPD

ED2
KD2
PD1, Z

ED3
KD3
PD3

H1

H2

H3

M, N

EP 2 870 565 B1

FIG 3

PS1, PS2, R3, L, H'1, H'2, H'3,

ED1, ED2, ED3

300

200

PS1

PS2

PS1

400

H2

H3

H1

100

102

103

ED1

ED2

ED3

PD1, Z

PD1, Z

PD3

H1

H2

H3

M, N

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011077289
- DE 102007034525 B4
- WO 0018162 A